# EUROPÄISCHE PATENTSCHRIFT

(11) **EP 2 279 683 B1**
(45) Veröffentlichungstag und Bekanntmachung des Hinweises auf die Patenterteilung: **04.01.2012**
(21) Anmeldenummer: 09405131.5
(22) Anmeldetag: 31.07.2009
(51) Int. Cl.: A47J 31/40, A47J 31/42, A47J 31/52

(54) **Verfahren zum benutzergesteuerten Herstellen eines insbesondere flüssigen Lebensmittel-Produkts**
Method for user-controlled production of a food product, particularly a liquid food product
Procédé de fabrication orienté vers l'utilisateur d'un produit alimentaire notamment liquide

(43) Veröffentlichungstag der Anmeldung: 02.02.2011
(73) Patentinhaber: Kohli, René M., 8427 Freienstein (CH)
(72) Erfinder: Kohli, René M., 8427 Freienstein (CH)
(74) Vertreter: Rüfenacht, Philipp Michael

(56) Entgegenhaltungen:
- EP-A1- 1 749 464
- GB-A- 2 442 223
- US-A1- 2006 188 620
- US-A1- 2007 214 966

## Beschreibung

### Technisches Gebiet

Die Erfindung betrifft ein Verfahren zum benutzergesteuerten Herstellen eines flüssigen Lebensmittel-Produkts, nämlich eines trinkfertigen Kaffee-Getränks, aus einem Vorstufen-Produkt, nämlich aus gerösteten Kaffeebohnen wobei durch eine benutzergesteuerte Einstellung von Parametern einer Maschine auf das Extrahieren der Genusssubstanzen Einfluss genommen wird, um eine gewünschte Qualität des Lebensmittel-Produkts herzustellen. Weiter bezieht sich die Erfindung auf einen Automaten zum Durchführen des Verfahrens.

### Stand der Technik

Automaten zum Herstellen trinkfertiger Getränke haben eine grosse Verbreitung. Insbesondere zur Herstellung von Kaffee-Getränken steht eine fast unüberschaubare Variation von halbautomatischen oder vollautomatischen Maschinen zur Verfügung. Während bei Vollautomaten mit einem einzigen Knopfdruck der gewünschte Kaffee ("normal", "Espresso", "Milchkaffee", etc.) erzeugt wird, hat der Benutzer bei gewissen Halbautomaten die Möglichkeit, auf Kaffeemenge, Mahlgrad, Wassermenge oder sogar Wasserdruck Einfluss zu nehmen (WO 2008/105017). Dies ist insbesondere aus Sicht derjeniger Benutzer wichtig, die aufgrund ihrer persönlichen Präferenzen auf die gustatorische und/oder olfaktorische Qualität des Kaffee-Getränks Einfluss nehmen möchten.

Aus der US 2006/188620 A1 ist ein Verfahren zur Herstellung eines individuell angepassten Getränks bekannt, bei welchem "delayed mixing" und/oder "delayed filtering" und optional "delayed dilution" kombiniert werden, um so verschiedensten Präferenzen der Benutzer in Bezug auf "body, character" und Konsistenz abzudecken. Das Verfahren basiert auf einem industriell hergestellten Kaffee-Pulver, das dann als Extrakt in die Kaffee-Maschine gegeben wird.

Es sind Kriterien bekannt, nach denen die Qualität eines Kaffee-Getränks humansensorisch beurteilt werden kann. Dazu gehören Attribute wie: "Bitterkeit", "Säure", "Körper", "Frucht", "Blume", "Crema", etc. Es handelt sich somit um Attribute, die direkt die Geschmacks- oder Geruchsempfindung angeben. Die bekannten Kaffee-Automaten erlauben nur die Vorgabe von technischen Parametern (wie Mahlgrad, Druck, Temperatur, etc.). Welche olfaktorische oder gustatorische Qualität des Kaffee-Getränks bei einer bestimmten Wahl von technischen Parametern resultiert, muss sich der Benutzer durch viele Versuche erarbeiten (sofern die Maschine überhaupt eine Variation der technischen Parameter zulässt). Hinzu kommt, dass die olfaktorische und gustatorische Qualität vom Ausgangsprodukt (d. h. von der Kaffeebohne und deren Röstung) abhängt. Eine korrekte Profilierung erfordert ein aufwändiges Verfahren, bei welchem, ausgehend von einer

bestimmten Kaffeesorte und einer bestimmten Herstellung, eine Gruppe von erfahrenen Testpersonen eine Reihe von unterschiedlichen Kaffee-Getränken geniesst und bewertet.

In der Praxis führt das dazu, dass wegen des grossen Versuchsaufwandes auf eine Optimierung des Kaffeeherstellungsverfahrens verzichtet wird und dass die automatischen Maschinen Kaffee typischerweise mit einer unbefriedigenden Qualität herstellen.

### Darstellung der Erfindung

Aufgabe der Erfindung ist es, ein dem Eingangs genannten technischen Gebiet zugehörendes Verfahren zu schaffen, welches ein Lebensmittel-Produkt in einer gewünschten Qualität reproduzierbar herzustellen vermag.

Die Lösung der Aufgabe ist durch die Merkmale des Anspruchs 1 definiert. Gemäss der Erfindung wird dazu ein Verfahren zum benutzergesteuerten Herstellen eines flüssigen Lebensmittel-Produkts, nämlich eines trinkfertigen Kaffee-Getränks, aus einem Vorstufen-Produkt, nämlich aus gerösteten Kaffeebohnen, eingesetzt.

In diesem Verfahren werden aus dem Vorstufen-Produkt durch einen Automaten gustatorisch und/oder olfaktorisch wahrnehmbare Genusssubstanzen extrahiert und in das Lebensmittel-Produkt überführt. Der Automat umfasst eine Maschine, welche als Prozesssteuerelemente ein Mahlwerk für Kaffeebohnen aufweist. Dabei wird über eine benutzergesteuerte Einstellung von mindestens zwei technischen Parametern des Automaten auf das Extrahieren der Genusssubstanzen Einfluss genommen, um eine gewünschte Qualität des Lebensmittel-Produkts herzustellen. Einer der mindestens zwei technischen Parameter ist der Mahlgrad des Mahlwerks. Eine Einstellung der technischen Parameter erfolgt durch eine benutzergesteuerte elektronische Übersetzungsschaltung, welche ausgehend von benutzergewählten Werten der humansensorischen Attribute und auf Basis eines im Voraus ermittelten Sensorikprofils des Vorstufen-Produkts die technischen Parameter zum Beeinflussen des Extrahierens der Genusssubstanzen bei der Herstellung des Lebensmittelprodukts steuert. Dabei ist einer der mindestens zwei technischen Parameter der Mahlgrad des Mahlwerks. Das im Voraus ermittelte Sensorikprofil des Vorstufenprodukts basiert auf einem humansensorischen Profilierungsprozess, in welchem nach einem Test-Schema durch verschiedene Einstellungen der technischen Parameter aus demselben Vorstufenprodukt verschiedene spezifische Getränke hergestellt und humansensorisch profiliert wurden.

Alternativ oder zusätzlich können auch haptisch wahrnehmbare Genusseffekte des Lebensmittelprodukts benutzergesteuert erzeugt oder beeinflusst werden. Auch solche Qualitäten können durch den Automaten steuerbar sein, indem zugrunde liegende technische Parameter durch den Automaten auf Basis des im Voraus ermittelten Sensorikprofils entsprechend der vom Benutzer eingestellten (und gewünschten) Qualität variiert werden.

Das erfindungsgemässe Verfahren erlaubt es, unter Berücksichtigung eines Sensorikprofils des Vorstufen-Produkts die gewünschte Qualität des Lebensmittel-Produkts herzustellen. Das ist insofern von grossem Vorteil, weil durch den Miteinbezug der Eigenschaften des Vorstufen-Produkts eine wesentlich genauer definierte Qualität des Lebensmittel-Produkts erzielt wird. Dies erlaubt nicht nur eine viel bessere Annäherung an die gewünschte Qualität des Lebensmittel-Produkts, sondern eröffnet diesbezüglich auch einen viel grösseren Variantenreichtum. Automatisch gesteuert trifft man so einerseits einen gewünschten Geschmack, Geruch oder eine Beschaffenheit des Lebensmittel-Produkts viel genauer, und andererseits können mehr Varianten der Genussqualität erreicht werden. Das erfindungsgemässe Verfahren weist dabei eine sehr hohe Anpassungsfähigkeit auf und erreicht so eine viel präzisere Reproduzierbarkeit des gewünschten Geschmacks (oder Geruchs oder Tastempfindens) des Lebensmittel-Produkts.

Bevorzugt wird zum Bereitstellen des Sensorikprofils zusätzlich zu einer humansensorischen Profilierung (welche in an sich bekannter Weise erstellt wird) eine chemische Analyse durchgeführt und eine Korrelation zwischen Analyseergebnis und Sensorikprofil berechnet.

Durch eine zusätzlich zur humansensorischen Profilierung durchgeführte chemische Analyse wie z. B. Gaschromatographie kann das Vorstufen-Produkt noch besser charakterisiert werden. Im Rahmen des erfindungsgemässen Verfahrens erlaubt dies eine bessere Anpassung an das Vorstufen-Produkt und dadurch eine genauere Extraktion der Genusssubstanzen. Das ermöglicht eine verbesserte Übereinstimmung mit der gewünschten Qualität des Lebensmittel-Produkts, was besonders bei Veränderungen des Vorstufen-Produkts signifikante Unterschiede ausmachen kann. Werden ausserdem noch Korrelationen berechnet, so können diese Werte die Güte der Berechnung der elektronischen Übersetzungsschaltung erhöhen, selbst wenn ein Teil der Informationen einmal nicht bekannt sein sollte. Auf diese Weise kann unter bestimmten Umständen auch auf die (relativ aufwändige) humansensorische Profilierung verzichtet werden oder die Profilierung muss z. B. nicht in Bezug auf alle humansensorischen Attribute ("Bitterkeit", "Säure", "Körper", "Frucht", "Blume", "Crema", etc.) durchgeführt werden, weil gewisse humansensorische Attribute aufgrund der chemischen Analyse ausreichend gut ableitbar sind.

Alternativ kann auf eine chemische Analyse verzichtet werden, oder es können auf andere Art und Weise zusätzliche Informationen über das Vorstufen-Produkt gewonnen werden. So wäre es z. B. unter anderem möglich, physikalische Analysen vorzunehmen oder die humansensorische Profilierung auszuweiten, indem man etwa Tester aus verschiedenen Zielgruppen einsetzt oder die Rahmenbedingungen variiert. Das Ergebnis jeder beliebigen zusätzlichen Methode, welche das Vorstufen-Produkt besser charakterisiert, kann vorteilhaft in das erfindungsgemässe Verfahren integriert werden.

Insbesondere arbeitet die Übersetzungsschaltung nach dem Prinzip eines neuronalen Netzes.

Unter einem neuronalen Netz wird im vorliegenden Zusammenhang eine elektronische Schaltung bzw. ein Computerprogramm verstanden, welche bzw. welches komplexe Muster lernen bzw. erkennen kann, ohne dass eine Abstraktion über die diesen Mustern zugrunde liegenden Regeln stattfindet. Neuronale Netze (oder Kohonen-Netze) sind in verschiedenen technischen Gebieten (wie z. B. Bildverarbeitung) schon eingesetzt worden und können daher als bekannt vorausgesetzt werden. Beim Eintrainieren des neuronalen Netzes wird ein Satz von Eingabeparametern (hier ein bestimmtes Sensorikprofil sowie die Werte der humansensorischen Attribute) und ein Satz von Ausgabeparametern (hier ein bestimmter Satz von technischen Parameterwerten) vorgegeben und das neuronale Netz stellt sich darauf ein, dass für die Eingabeparameter die passenden Ausgabeparameter generiert werden. Aus diesem Grund eignen sich neuronale Netze ganz besonders für die erfindungsgemässe Übersetzungsschaltung, da mit einem neuronalen Netz die Werte einer Vielzahl der zur Herstellung einer gewünschten Qualität des Lebensmittel-Produkts nötigen technischen Parameter berechnet werden kann, ohne dabei ein detailliertes theoretisches Regelwerk aufstellen zu müssen. Neuronale Netze müssen trainiert werden, sind dafür aber sehr flexibel. Diese Flexibilität erlaubt eine fortwährende Anpassung des Herstellungsverfahrens des Lebensmittel-Produkts und ist besonders dann von Vorteil, wenn es sich beim Vorstufen-Produkt um ein natürliches Produkt mit stark variierenden Eigenschaften handelt.

Es können aber auch Übersetzungsschaltungen verwendet werden, welche nicht nach dem Prinzip eines neuronalen Netzes aufgebaut sind. Es können passende Funktionen aufgrund von Sensitivitätsanalysen ermittelt werden. Mit Sensitivitätsanalysen wird statistisch ermittelt, welche Eingabeparameter eine starke bzw. eine messbare Wirkung auf einen bestimmten Ausgabeparameter hat. Solange die eingehenden Informationen zu einem passenden Resultat führen, können alle verfügbaren und denkbaren Techniken in der Übersetzungsschaltung eingesetzt werden.

Mit Vorteil gibt der Automat zur Herstellung des Lebensmittel-Produkts mindestens ein Zutaten-Produkt zu. Das Zutaten-Produkt ist bei einem Kaffee-Getränk z. B. Kaffeerahm, Milch oder Zucker. Es kann aber auch ein Gewürz oder ein anderes Zutatenprodukt sein, das den Geruch und/oder Geschmack oder das Tastempfinden im Mund verändert.

Die Zugabe von jedem zusätzlichen Zutaten-Produkt vergrössert den Variantenreichtum der Qualität des LebensmittehProdukts wesentlich. Durch die grössere Variationsmöglichkeit kann einerseits eine gewünschte Qualität des Lebensmittel-Produkts viel präziser und reproduzierbarer getroffen werden, und andererseits eröffnet sich die Möglichkeit von neuen sensorischen Erfahrungen beim Genuss des Lebensmittel-Produkts. Ausserdem kann so auch auf ernährungstechnische Aspekte des Lebensmittels Einfluss genommen werden (Stichworte: Food Design, Functional Food), indem z. B. Diätanforderungen oder spezielle Bedürfnisse (Allergien, Diabetes, Schwangerschaften, Mangel- oder Fehlernährung usw.), oder Vorlieben bzw. Einschränkungen (z. B. auch ethischer oder religiöser Art) Einfluss in die persönliche Rezeptur finden. Als Zutaten-Produkte kommen alle Produkte in Frage, welche sich maschinell Verarbeiten und Dosieren lassen, so z. B. Kuhmilch, Soyamilch, Rahm, Zucker, künstliche Süssstoffe, Alkoholika, Zitronensaft oder andere Fruchtsäfte, Säuerungsmittel, Farbstoffe, Verdickungsmittel, Geschmacksverstärker, Schäumungsmittel, Salze, Gewürze, Mineralstoffe, Spurenelemente, Vitaminzusätze und Vieles mehr. Im Prinzip ist auch eine Dosierung und Verabreichung von Medikamenten denkbar (Hustensäfte, leichte Schmerzmittel usw.).

Es kann aber natürlich auch auf die Verwendung von Zutaten-Produkten verzichtet werden.

Es hat sich als zweckdienlich erwiesen, dass bei der Einstellung der technischen Parameter eine Lagerdauer des Vorstufen-Produkts einberechnet wird.

Häufig hat die Lagerdauer eines Vorstufen-Produkts einen gewissen Einfluss auf dessen Eigenschaften. Um die gewünschte Qualität des Lebensmittel-Produkts unabhängig von der Lagerdauer herstellen zu können, muss die Übersetzungsschaltung auf die realen momentanen Eigenschaften des Vorstufen-Produkts zugreifen können. Über das Einberechnen der Lagerdauer können so Veränderungen des Vorstufen-Produkts kompensiert und in Kombination dessen Sensorikprofil die optimalen technischen Parameter ermittelt werden.

Die Lagerdauer kann z. B. von einem Zeitnehmer gemessen werden, der durch den Benutzer beim Befüllen des Automaten manuell initialisiert wird. Die Initialisierung kann aber auch automatisch ausgelöst werden, z. B. durch Sensoren, welche das Öffnen des Lagerbehälterverschlusses anzeigen oder eine Zunahme der Füllmenge messen (optisch, mechanisch usw.) oder dergleichen. Die Initialisierung muss nicht zwingend ein "Rückstellen auf Null" bedeuten. Es kann auch die bisherige Lagerdauer des Vorstufen-Produkts bis zur Verwendung im erfindungsgemässen Automaten sein.

Im Fall von Kaffee kann die Lagerdauer Einfluss auf viele verschiedene Qualitätsmerkmale haben, so kann z. B. die Süsse abnehmen. Durch eine Anpassung der technischen Parameter (kürzere Brühdauer, tiefere Temperatur oder Ähnliches) oder die entsprechende Dosierung von Zutaten-Produkten (z. B. mehr Milch und/oder Zucker) kann dies unter Umständen teilweise oder ganz kompensiert werden.

Die Lagerdauer kann aber auch ganz ausser Betracht gelassen werden. Oder es könnte z. B. auch zeitnah zur Verwendung des Vorstufen-Produkts eine Messung seiner Eigenschaften vorgenommen werden. Idealerweise wird vor jedem Einsatz des erfindungsgemässen Verfahrens das Sensorikprofil des Vorstufen-Produkts aktuell und komplett vermessen (was in der Praxis aber in den meisten Fällen mit einem sehr hohen technischen Aufwand verbunden wäre). Man könnte sich aber auch auf einen oder mehrere besonders aussagekräftige Parameter beschränken, z. B. relative Feuchtigkeit, Gewicht, Farbe, Säuregehalt oder Ähnliches.

Zur Durchführung des erfindungsgemässen Verfahrens wird ein Automat benutzt, welcher folgende Teile beinhaltet: eine Maschine zum Extrahieren von gustatorisch und/oder olfaktorisch wahrnehmbare Genusssubstanzen aus dem Vorstufen-Produkt und zu deren Überführung in das Lebensmittel-Produkt, mindestens zwei Prozesssteuerelemente zum benutzergesteuerten Einstellen von zwei einstellbaren technischen Parametern des

Automaten und zum Beeinflussen des Extrahierens der Genusssubstanzen, um eine gewünschte Qualität des Lebensmittel-Produkts herstellen zu können, wobei als Prozesssteuerelement ein Mahlwerk für Kaffeebohnen vorgesehen ist, und eine elektronische Übersetzungsschaltung zum Einstellen der technischen Parameter der Prozesssteuerelemente, welche ausgehend von benutzergewählten Werten der Attribute und auf Basis eines im Voraus ermittelten Sensorikprofils des Vorstufen-Produkts die technischen Parameter zum Beeinflussen des Extrahierens der Genusssubstanzen bei der Herstellung des Lebensmittelprodukts steuert. Dabei ist einer der mindestens zwei technischen Parameter der Mahlgrad des Mahlwerks, und die elektronische Übersetzungsschaltung greift auf das Sensorikprofil des Vorstufenprodukts zu, welches durch einen humansensorischen Profilierungsprozess ermittelt worden ist, in dem nach einem Test-Schema durch verschiedene Einstellungen der technischen Parameter aus demselben Vorstufenprodukt verschiedene spezifische Getränke hergestellt und humansensorisch profiliert wurden.

Bevorzugt verwendet man einen Automaten, an welchem eine Eingabeeinrichtung vorhanden ist, an welcher die Werte der humansensorischen Attribute durch den Benutzer zu wählen sind.

Der Vorteil an einer Eingabeeinrichtung ist der direkte Zugriff auf die zu regulierenden Werte der Attribute. Erfolgt die gewünschte Einstellung durch solch eine Schnittstelle, ist das meist die einfachste, rascheste und bequemste Lösung und dient bei einer vorhandenen Anzeige gleichzeitig auch zur Kontrolle. Zudem ist eine solche Informationsübermittlung wenig störanfällig.

Es ist natürlich auch denkbar, dass ein Hersteller Kaffeeautomaten anbietet, die dieselbe Auswahl mit qualitativ gutem Kaffee zur Verfügung stellen. Weiter ist denkbar, dass ein grosses Unternehmen mit verschiedenen Standorten an allen Standorten die gleiche Maschine hat (um die Wartung zu vereinfachen) und dass in die Kaffeeautomaten unterschiedliche Kaffee-Sorten eingefüllt werden können, welche aufgrund der Profilierung in das stets selbe Qualitätssortiment verarbeitet werden können. Die Werte der Attribute müssen aber nicht zwingend durch eine Eingabeeinrichtung am Automaten eingestellt werden, diese Informationen können auf mannigfaltige Weise in den Automaten eingespiesen werden. Unter anderem können die Werte der Attribute auf dem Weg über beliebige elektronische Geräte festgelegt und dann z. B. per Internet, LAN, GSM, Bluetooth oder USB an den Automaten übermittelt werden.

Insbesondere ist die elektronische Übersetzungsschaltung des Automaten mit einem Datenspeicher für ein Sensorikprofil mindestens eines Vorstufen-Produkts versehen.

Für das erfindungsgemässe Verfahren ist die in einem Sensorikprofil enthaltene Information essentiell, und darum ist es von grossem Vorteil, wenn mindestens ein Sensorikprofil in der Übersetzungsschaltung gespeichert und dadurch rasch verfügbar ist. Vorzugsweise sind aber zwei oder mehr Sensorikprofile abgespeichert. Je mehr Sensorikprofile gespeichert sind, desto mehr Kaffeesorten können erfindungsgemäss verarbeitet werden.

Auf einen internen Speicher kann aber verzichtet werden, wenn ein Sensorikprofil auf eine andere Art und Weise zur Verfügung steht, z. B. direkt gemessen wird, eine manuelle Eingabe existiert oder etwa ein externer Speicher vorgesehen ist, welcher bei Bedarf abgefragt werden kann. Das Vorstufen-Produkt könnte z. B. aber auch mit seinem Sensorikprofil versehen sein, welches maschinell ausgelesen werden kann (z. B. ein Strichcode an der Verpackung oder Ähnliches).

Mit Vorteil weist der Automat einen Vorratsbehälter für das Vorstufen-Produkt und eine Lagerzeitmessvorrichtung auf, welche mit der Übersetzungsschaltung in Verbindung steht.

Es ist bequem und zeitsparend, wenn der Automat nicht bei jedem Gebrauch neu mit dem Vorstufen-Produkt geladen werden muss, sondern ein Vorratsbehälter vorhanden ist. Im Falle einer raschen zeitabhängigen Veränderung des Sensorikprofils ist es auch von Vorteil, wenn die Lagerdauer gemessen und diese an die Übersetzungsschaltung weitergeleitet werden kann. Der Vorratsbehälter kann zusätzlich derart konzipiert werden, dass sich die Lagerfähigkeit des Vorstufen-Produkts verbessert (z. B. durch Kühlung, UV-Schutz, Luftabschluss, Sauerstoffausschluss, Schutzgas, Vakuum, Entfeuchtung oder Ähnliches).

Alternativ kann der Automat vor jedem Gebrauch separat befüllt werden, wodurch der Bedarf an einer Lagerzeitmessvorrichtung verschwinden kann. Falls ein Vorratsbehälter eingebaut ist, kann auf eine Lagermessvorrichtung verzichtet werden, wenn die zeitliche Änderung des Sensorikprofils vernachlässigt wird, diese z. B. anhand einer oder mehrerer charakteristischen Parameter hochgerechnet oder sogar jedes Mal komplett neu vermessen wird. Es können auch mehrere Vorratsbehälter eingebaut sein, wobei die darin gelagerten Vorstufen-Produkte sich sowohl in Sorte als auch in Lagerdauer unterscheiden können. In Sinn einer vereinfachten Ausführung kann man auch nur eine einfache Verfallsanzeige vorsehen, welche dem Benutzter meldet, wenn der Vorrat gewechselt werden soll, weil die vorgegebene Lagerdauer überschritten ist.

Besonders geeignet ist ein Automat, der einen Speicher für Rezepte aufweist, in welchem die technischen Parameter und/oder die Werte der humansensorischen Attribute abgespeichert und zur benutzergesteuerten Herstellung abgerufen werden können.

Ein interner Rezeptspeicher für technische Parameter und/oder Werte der humansensorischen Attribute bietet die Vorteile einer raschen Verfügbarkeit der Information, einer hohen Autonomie und Flexibilität des Automaten sowie einer geringen Pannenanfälligkeit. Ein Rezept beschreibt die Herstellung eines Lebensmittel-Produkts einer gewünschten Qualität und besteht aus dessen spezifischen Werten der technischen Parameter. Wenn sich ein Benutzer entschieden hat, dass er wiederholt eine bestimmte sensorische Qualität des Kaffee-Getränks wünscht, dann kann er über eine "Speicher"-Taste den Automaten anweisen, die technischen Parameter und die verwendeten Vorstufen-Produkte als Datensatz in einem sogenannten Rezeptspeicher abzuspeichern, so dass der Benutzer später nicht mehr die Werte der humansensorischen Attribute eingeben muss, sondern einfach das abgespeicherte Rezept abrufen kann und der Automat produziert das entsprechende Kaffee-Getränk.

Es ist aber auch möglich, die technischen Parameter und/oder die Werte der humansensorischen Attribute extern zu speichern, bei Bedarf abzufragen oder direkt manuell einzustellen.

Mit Vorteil weist der Automat eine Datenschnittstelle für eine Fernabfrage von Sensorikprofilen verschiedener Vorstufen-Produkte auf.

Eine Datenschnittstelle für eine Fernabfrage von Sensorikprofilen erlaubt es, den Automaten vielseitiger und flexibler einzusetzen. Die Datenschnittstelle kann ganz einfach zum Anschluss eines externen Speichers verwendet, oder aber auch viel ausgefeilter eingesetzt werden, indem man einen Datenzugriff z. B. über Internet, WLAN, GSM, Bluetooth oder ähnliche Kanäle vorsieht. Neben den Sensorikprofilen können aber auch die entsprechenden Informationen für die Prozesssteuerung übertragen werden, welche die Sensorikprofile in Relation zu den technischen Parametern setzen. Im Fall von neuronalen Netzen könnte man die Verknüpfungen übertragen bzw. einen Klon herstellen.

Der Automat kann auch ohne Datenschnittstelle realisiert werden, oder mit mehreren Datenschnittstellen. Falls eine oder mehrere Schnittstellen vorhanden sind, können diese zusätzlich auch auf andere Weise genutzt werden, so etwa beispielsweise zum Abrufen von Datenbanken von Benutzerprofilen und Rezepten auf Servern, zur Fernsteuerung des Automaten, für Firmwareupdates, zur Gewinnung zusätzlicher Informationen für das Training des neuronalen Netzes innerhalb des Profilierungsprozesses, zur Wartung und für Ferndiagnosen bei Fehlfunktionen sowie zum Abgleichen verschiedener Automaten, um nur einige zu nennen.

Es hat sich als zweckdienlich erwiesen, dass im Automaten als Prozesssteuerelemente zur Herstellung eines trinkfertigen Kaffee-Getränks zusätzlich zum Mahlwerk für Kaffeebohnen mindestens eines der folgenden Mittel vorgesehen ist: ein Erhitzer für Wasser, ein Druckerzeuger für Wasser, ein Volumensensor für das Wasser oder ein Zeitgeber für die Einwirkungszeit.

Diese Mittel spielen im Herstellungsprozess eine entscheidende Rolle, und die damit verbundenen technischen Parameter haben einen deutlichen Einfluss auf die Qualität des Kaffee-Getränks. Sind mindestens zwei dieser Prozesssteuerelemente durch das erfindungsgemässe Verfahren geregelt, kann die gewünschte Qualität des Kaffee-Getränks genauer getroffen und der Variantenreichtum desselben maximiert werden.

Auch die Regelung nur eines Prozesssteuerelementes ist durch das erfindungsgemässe Verfahren möglich, aber in dieser Form wird das Potential der Erfindung nicht ausgeschöpft. Je mehr Prozesssteuerelemente in das Verfahren eingebunden sind, umso deutlicher treten die Stärken des erfindungsgemässen Verfahrens zu Tage. In diesem Sinn weist ein Kaffeeautomat vorzugsweise mindestens drei oder sogar mindestens vier verschiedene einstellbare Prozesssteuerelemente (bzw. mit Verstellfunktion versehene Herstellungskomponenten) auf. Ausserdem können beliebige weitere Prozesssteuerelemente in das Verfahren aufgenommen werden, so z. B. ein Volumen- oder Gewichtsensor für gemahlenen und/oder ungemahlenen Kaffee, ein Temperatursensor für das Kaffee-Gemisch, ein Volumen- oder Gewichtsensor und/oder Temperatursensor für Zusatzprodukte wie Milch, Rahm oder dergleichen oder ein Zeitgeber für die Lagerdauer des ungemahlenen Kaffees und/oder der Zusatzprodukte.

Insbesondere lassen sich an der Eingabeeinrichtung die Werte eines oder mehrerer humansensorischen Attribute wie z. B. "Bitterkeit", "Säure", "Körper", "Frucht", "Blume", "Crema", etc. direkt einstellen.

Der Vorteil der Verwendung von humansensorischen Attributen liegt darin, dass die Qualität des Kaffee-Produkts leicht verständlich und intuitiv in die gewünschte Richtung verändert werden kann. Eine alleinig technische Parametrisierung ist diesbezüglich nicht genug aussagekräftig.

Alternativ können auch technische Parameter an der Eingabeeinrichtung einstellbar sein, etwa Menge von Kaffee und/oder Wasser, Wassertemperatur, Einwirkungszeit, etc. Auch andere Parameter wie z. B. Temperatur oder Volumen des Kaffee-Produkts können einstellbar sein, oder eine beliebige Mischung von verschiedenen Parametern und Attributen.

Besonders vorteilhaft ist ein Automat, wenn er ein Benutzerführungsprogramm aufweist, welches den Benutzer bei der Festlegung eines benutzerdefinierten Rezepts unterstützt. Dies geschieht, indem mindestens zwei automatisch hergestellte Lebensmittel-Produkte mit unterschiedlichen Werten der humansensorischen Attribute hergestellt und dem Benutzer zusammen mit einer visuellen Darstellung der zugehörigen Werte der humansensorischen Attribute zum Test vorgelegt werden. Der Benutzer kann ausgehend von einem der Lebensmittel-Produkte bei Bedarf eine Veränderung der Werte der humansensorischen Attribute vornehmen und die entsprechenden technischen Parameter und/oder Werte der humansensorischen Attribute im Rezeptspeicher abspeichern.

Da das erfindungsgemässe Verfahren darauf abzielt, eine gewünschte Qualität des Lebensmittel-Produktes möglichst genau zu erreichen, muss die gewünschte Qualität entsprechend präzis definiert sein. Um die entsprechenden Werte der humansensorischen Attribute optimal einzustellen ist es von grossem Vorteil, wenn ein Benutzer durch ein Test-/Degustationsverfahren schrittweise an die gewünschte Qualität herangeführt werden kann. Eine gezielte Gegenüberstellung zweier oder mehrerer Lebensmittel-Produkte variierender Qualität verdeutlicht deren Unterschiede, erleichtert die Auswahl der zu optimierenden humansensorischen Attribute und ergibt eine gute Abschätzung für das nötige Mass der Veränderung der entsprechenden Werte (nicht jedem Kaffeetrinker ist z. B. klar, wie sich z. B. das Attribut "Crema" anfühlt).

Alternativ kann auch auf ein solches Benutzerführungsprogramm verzichtet und ein Degustationsverfahren manuell durchgeführt werden. Oder es kann sich ein Benutzerführungsprogramm anderer Mittel als der Gegenüberstellung zweier erfindungsgemäss hergestellten Lebensmittel-Produkte verschiedener Qualität bedienen, indem z. B. ein Fragenkatalog die gewünschte Qualität des Lebensmittel-Produkts ermittelt, vorgefertigte Degustationsproben eingesetzt werden oder Ähnliches.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

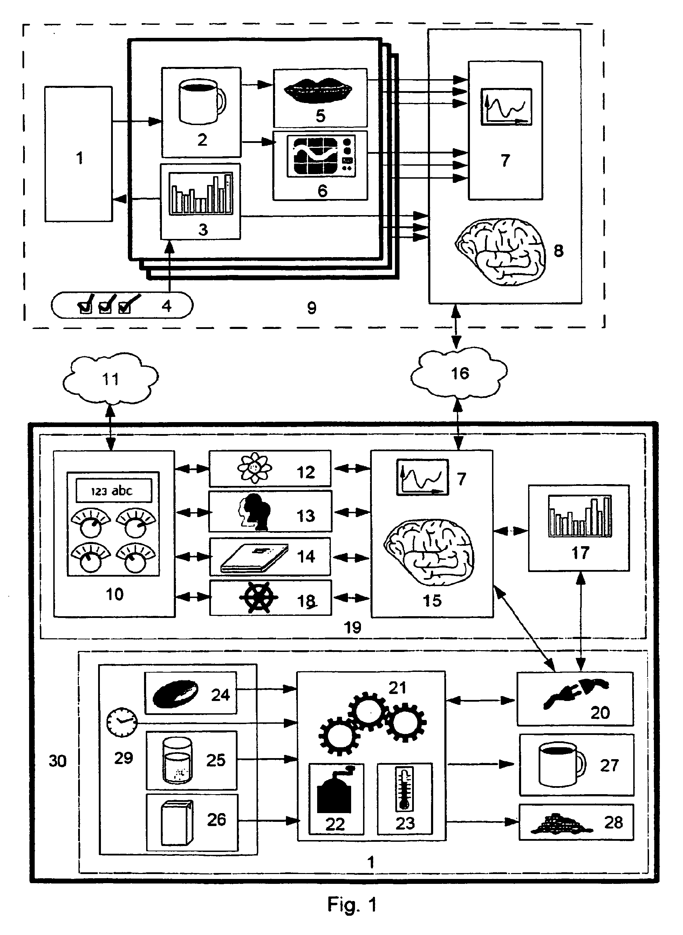

- Fig. 1: eine schematische Darstellung der Erfindung.

### Wege zur Ausführung der Erfindung

In Fig. 1 wird das erfindungsgemässe Verfahren anhand eines Beispiels eines Kaffee-Automaten schematisch dargestellt.

Im oberen Teil von Fig. 1 ist ein Profilierungsprozess 9 einer Kaffee-Sorte oder eines Röstprodukts beschrieben. Dabei wird eine Kaffee-Maschine 1 verwendet, welche im unteren Teil von Fig. 1 detailliert erläutert wird. Die Funktionsweise der Kaffee-Maschine 1 wird über technische Parameter 3 (Mahlgrad, Druck, Temperatur, etc.) geregelt, welche im Rahmen des Profilierungsprozesses 9 nach einem bestimmten Test-Schema 4 eingestellt werden. Das Test-Schema 4 umfasst verschiedene Einstellungen der technischen Parameter 3 und generiert für jede Einstellung (und jede einzelne Kaffee-Sorte oder jedes einzelne Röstprodukt) ein spezifisches Kaffee-Getränk 2, welches einerseits humansensorisch profiliert 5 und andrerseits technisch profiliert 6 wird.

Die humansensorische Profilierung 5 erfolgt typischerweise durch Verkostung der Kaffee-Getränke durch eine Gruppe von spezialisierten Prüfern. Die technische Profilierung 6 ist eine chemische Messung von Inhaltsstoffen (Bitterstoffe, Öle usw.) oder Eigenschaften (ph-Wert, Reaktivität usw.). Die beiden Profilierungen humansensorischer 5 und technischer Art 6 werden für jede Einstellung der technischen Parameter 3 erfasst und zusammen im Sensorikprofil 7 gespeichert. Es werden also beispielsweise 50 verschiedene Kaffee-Getränke hergestellt, wobei die zugehörigen technischen Parameter notiert bzw. in Datensätzen abgespeichert werden, und die 50 Kaffee-Getränke werden von den Prüfern sensorisch bewertet bzw. qualifiziert. Man hat also 50 technische Parametersätze (welche angeben, wie das jeweilige Getränk hergestellt wurde) und 50 zugehörige humansensorische Profile.

Das Sensorikprofil 7 und die entsprechenden technischen Parameter 3 werden dann durch ein neuronales Netz 8 miteinander korreliert. Auf diese Art kann von den technischen Parametern 3 auf das Sensorikprofil 7 geschlossen werden.

Im unteren Teil von Fig. 1 ist ein Kaffee-Automat 30 schematisch dargestellt. Der Kaffee-Automat 30 besteht aus zwei Hauptbestandteilen: aus einer Kaffee-Maschine 1 und aus einer Prozesssteuerung 19. Die Kaffee-Maschine 1 wird dabei über eine Maschinen-Schnittstelle 20 von der Prozesssteuerung 19 geregelt.

Die Prozesssteuerung 19 verfügt über eine Benutzer-Schnittstelle 10, durch welche ein Benutzer den Kaffee-Automaten 30 bedienen kann. Insbesondere werden durch die Benutzer-Schnittstelle 10 die Werte der humansensorischen Attribute 12 des Kaffee-Produkts (z. B. wie viel "Bitterkeit", "Säure", "Körper", "Frucht", "Blume", "Crema", etc.) entsprechend den Wünschen des Benutzers eingestellt. Dem Benutzer können ein oder mehrere Benutzerprofile 13 zugeordnet werden, welches die individuellen Werte der humansensorischen Attribute 12 für ein oder mehrere verschiedene Kaffee-Produkte abspeichert. Des weiteren kann ein Benutzerprofil 13 auch noch mehr umfassen, so etwa technische Merkmale wie z. B. Menge des Kaffee-Produkts, Informationen zur Bezugsberechtigung der Produkte sowie einen Abrechnungsstand (Guthaben) oder statistische Daten wie z. B. Anzahl der konsumierten Kaffee-Produkte oder die Summe der täglich konsumierten Inhaltsstoffe.

Die Benutzer-Schnittstelle 10 kann auch auf Rezepte 14 zurückgreifen, welche eine Auswahl von typischen Kaffee-Getränken von verschiedener Qualität bieten und daher einen guten Ausgangspunkt für die persönliche Anpassung der Werte der humansensorischen Attribute 12 an die Wünsche des Benutzers darstellen. Ausserdem werden über die Benutzer-Schnittstelle 10 Steuersignale 18 eingegeben, welche z. B. die Herstellung eines Kaffee-Getränks 27 auslösen, Stromspar-Funktionen des Kaffee-Automaten 30 ein- bzw. ausschalten, die Auswahl des richtigen Sensorikprofils 7 für das entsprechende Vorstufen-Produkt 24 ermöglichen oder Ähnliches.

Eine manuelle Eingabevorrichtung der Benutzerschnittstelle 10 ist bevorzugt derart ausgestaltet, dass direkt am Automaten manuelle Eingaben über Bedienelemente wie Schalter, Knöpfe, Tasten, berührungsempfindliche Bildschirme oder dergleichen montiert sind, wobei vorteilhafterweise zusätzlich eine Visualisierung verschiedener Parameter und/oder Werte von Attributen auf einer Anzeige oder an den Bedienelementen erfolgt.

Auch eine oder mehrere Statusanzeigen für den Betriebszustand des Automaten, Informationen zu Benutzerprofilen 13 und Rezepten 14, Fehlermeldungen, Füllstandsanzeigen usw. sind in die Benutzerschnittstelle 10 integriert. Die Darstellung dieser Informationen kann durch Displays aller Art, Lämpchen, Leuchten und auch Schieber oder andere mechanische Zeiger oder dergleichen dargestellt werden.

Die Prozesssteuerung 19 kann aber auch extern über Kommunikationskanäle 11 angesprochen werden, beispielsweise über Internet, WLAN, GSM, Bluetooth, USB Bus oder Andere. Auf diese Weise lässt sich der Kaffee-Automat 30 auch per Handy, Computer, Fernsteuerungen und anderen Geräten steuern. Eine Identifizierung des Benutzers und/oder eine allfällige Abrechnung kann über dieselben Kanäle erfolgen, oder es kann in der Benutzerschnittstelle auch ein Bezahlsystem vorgesehen sein (gegen Bargeld, mit Jetons oder Guthabenkarten oder per Guthaben in einem Nutzerprofil 13 oder Ähnliches).

Auf die Werte der humansensorischen Attribute 12, die Benutzerprofile 13 sowie die Rezepte 14 greift ein neuronales Netz 15 zurück, welches durch die Steuersignale 18 geregelt wird und die Rechenaufgaben innerhalb der Prozesssteuerung 19 übernimmt. Das neuronale Netz 15 entspricht dabei in seiner Funktionsweise genau dem neuronalen Netz 8, welches im Profilierungsprozess 9 trainiert wird (d. h. das neuronale Netz 15 ist ein Klon des neuronalen Netzes 8).

Innerhalb der Prozesssteuerung 19 wird dem neuronalen Netz 15 ein vom Benutzer gewünschtes Sensorikprofil eingespiesen, und das neuronale Netzes 15 ermittelt daraus die technischen Parameter 17, die zu dem gewünschten Sensorikprofil führen.

Die vom neuronalen Netz 15 in der Prozesssteuerung 19 berechneten technischen Parameter 17 werden über eine Maschinen-Schnittstelle 20 an die Kaffee-Maschine 1 übermittelt. Die technischen Parameter 17 regeln dadurch den Kaffee-Herstellungsprozess 21, welcher im vorliegenden Beispiel lediglich zwei regelbare Prozesssteuerelemente 22, 23 beinhaltet: Mahlgrad 22 einer Kaffee Sorte A 24 und Temperatur 23 von Wasser 25.

Das Vorstufen-Produkt Kaffee Sorte A 24, Wasser 25 sowie ein Zutaten-Produkt Milch 26 sind in einem Vorratsbehälter 29 mit Lagerdauermessung aufbewahrt. Der Vorratsbehälter 29 ist in verschiedene Kammern unterteilt, in denen die Kaffee Sorte A 24, Wasser 25 und Milch 26 getrennt gelagert werden können, wobei die einzelnen Kammern jeweils optimierte Lagerbedingungen für das gelagerte Gut bieten (z. B. trocken und dunkel für Kaffee, kühl für Milch, etc.) und über eine Lagerdauermessvorrichtung verfügen. Die Lagerdauermessung fliesst in den Kaffee-Herstellungsprozess 21 ein, indem es über die Maschinen-Schnittstelle 20 zum neuronalen Netz 15 gelangt und dort in die Berechnungen der technischen Parameter 17 einbezogen wird.

Während des Kaffee-Herstellungsprozesses 21 wird nicht nur das Kaffee-Getränk 27 produziert, sondern es fällt auch Trester 28 an, welcher entsorgt werden muss.

Die beschriebene Ausführungsform ist lediglich als illustratives Beispiel zu verstehen, welche im Rahmen der Erfindung beliebig erweitert oder abgewandelt werden kann.

Auf die in Fig. 1 dargestellte Zusammenlegung von Prozesssteuerung 19 und Kaffee-Maschine 1 zu einem Kaffee-Automaten 30 kann auch problemlos verzichtet werden, indem die Maschinen-Schnittstelle 20 so ausgestaltet wird, dass das neuronale Netzwerk 15 mit einer eindeutigen Identifikation und auch über Distanz kontaktiert werden kann. Auf diese Weise können Kaffee-Maschine 1 und Prozesssteuerung 19 getrennt und beispielsweise auch mehrere Kaffee-Maschinen von derselben Prozesssteuerung 19 gesteuert werden. Dies ist besonders von Vorteil, wenn ein neuronales Netzwerk 15 teuer ist und mehrere Kaffee-Maschinen für denselben Benutzerkreis zur Verfügung stehen.

In Fig. 1 wird das Kaffee-Getränk 27 aus der Kaffee-Sorte A als Vorstufen-Produkt 24, Milch als Zutaten-Produkt 26 sowie Wasser 25 hergestellt. Die Anzahl und Art der Rohstoffe kann aber beliebig variiert werden, so können z. B. verschiedene Kaffee-Sorten benutzt werden, um in reiner Form oder als Mischungen die Vielfalt der Qualität des Kaffee-Getränks 27 zu erhöhen oder die gewünschte Qualität genauer zu treffen. Auch können neben Milch 26 noch andere Zutaten-Produkte wie beispielsweise Rahm oder Süssstoffkonzentrate verwendet werden.

Im Gegensatz zum in Fig. 1 dargestellten Profilierungsprozesses 9 kann auch nur entweder eine humansensorische Profilierung 5 oder nur eine technische Analyse 6 durchgeführt werden. Es wäre auch möglich, technische Analyseinstrumente in die Maschine 1 zu integrieren, um aktuelle Informationen über die Vorstufen-Produkte 24 gewinnen zu können.

Die Sensorikprofile 7 müssen nicht wie in Fig. 1 gezeigt über einen Kommunikationskanal 16 übermittelt werden oder in dem neuronalen Netz 15 gespeichert sein. Es wäre auch denkbar, dass die Vorstufen-Produkte 24 direkt mit ihrem jeweiligen Sensorikprofil 7 versehen werden, so dass ein Automat 30 diese lesen kann. In einem solchen Ausführungsbeispiel würden die Vorstufen-Produkte 24 z. B. in Behältern verkauft und/oder geliefert, welche mit einem maschinenlesbaren Code versehen sind (z. B. ein ein- oder zweidimensionaler Strichcode oder Ähnliches). Der Automat 30 liest dann jeweils entweder beim Befüllen mit dem Vorstufen-Produkt 24 oder vor dem Kaffee-Herstellungsprozess 24 das entsprechende Sensorikprofil 7 ein und führt es der Prozesssteuerung 19 zu.

## Patentansprüche

1. Verfahren zum benutzergesteuerten Herstellen eines flüssigen Lebensmittel-Produkts (27), nämlich eines trinkfertigen Kaffee-Getränks, aus einem Vorstufen-Produkt (24), nämlich aus gerösteten Kaffeebohnen, wobei
a) aus dem Vorstufen-Produkt (24) durch einen Automaten (30) gustatorisch und/oder olfaktorisch wahrnehmbare Genusssubstanzen extrahiert und in das Lebensmittel-Produkt (27) überführt werden, wobei
b) der Automat eine Maschine umfasst, welche als Prozesssteuerelement ein Mahlwerk für Kaffeebohnen (22) aufweist, und wobei
c) durch eine benutzergesteuerte Einstellung von mindestens zwei einstellbaren technischen Parametern des Automaten (30) auf das Extrahieren der Genusssubstanzen Einfluss genommen wird, um eine gewünschte Qualität des Lebensmittel-Produkts (27) herzustellen,
**dadurch gekennzeichnet, dass**
d) die Einstellung der technischen Parameter (17) durch eine benutzergesteuerte elektronische Übersetzungsschaltung (15) erfolgt, welche ausgehend von benutzergewählten Werten der humansensorischen Attribute (12) und auf Basis eines im Voraus ermittelten (9) Sensorikprofils (7) des Vorstufen-Produkts (24) die technischen Parameter (17) zum Beeinflussen des Extrahierens der Genusssubstanzen bei der Herstellung des Lebensmittelprodukts steuert, dass
e) einer der mindestens zwei technischen Parameter (17) der Mahlgrad des Mahlwerks (22) ist, und dass
f) das Sensorikprofil (7) des Vorstufenprodukts (24) auf einem humansensorischen Profilierungsprozess(9) basiert, in welchem nach einem Test-Schema (4) durch verschiedene Einstellungen der technischen Parameter (3) aus demselben Vorstufenprodukt (24) verschiedene spezifische Getränke (2) hergestellt und humansensorisch profiliert (5) wurden.

2. Verfahren nach Anspruch 1, **dadurch gekennzeichnet, dass** zum Bereitstellen des Sensorikprofils (7) zusätzlich zu einer humansensorischen Profilierung (5) eine chemische Analyse (6) durchgeführt wird und dass eine Korrelation berechnet wird.

3. Verfahren nach Anspruch 1 oder 2, **dadurch gekennzeichnet, dass** die Übersetzungsschaltung (15) nach dem Prinzip eines neuronalen Netzes arbeitet.

4. Verfahren nach einem der Ansprüche 1 bis 3, **dadurch gekennzeichnet, dass** der Automat (30) zur Herstellung des Lebensmittel-Produkts (27) mindestens ein Zutaten-Produkt (26) zugibt.

5. Verfahren nach einem der Ansprüche 1 bis 4, **dadurch gekennzeichnet, dass** bei der Einstellung der technischen Parameter (17) eine Lagerdauer (29) des Vorstufen-Produkts (24) einberechnet wird.

6. Automat (30) zur Durchführung eines Verfahrens nach Anspruch 1, umfassend
a) eine Maschine (1) zum Extrahieren von gustatorisch und/oder olfaktorisch wahrnehmbaren Genusssubstanzen aus dem Vorstufen-Produkt (24) und zu deren Überführung in das Lebensmittel-Produkt (27),
b) mindestens zwei Prozesssteuerelemente (22, 23) zum benutzergesteuerten Einstellen von zwei einstellbaren technischen Parametern (17) des Automaten (30) und zum Beeinflussen des Extrahierens der Genusssubstanzen, um eine gewünschte Qualität des Lebensmittel-Produkts (27) herstellen zu können,
c) wobei als Prozesssteuerelement ein Mahlwerk für Kaffeebohnen (22) vorgesehen ist,
**dadurch gekennzeichnet**, daas
d) eine elektronische Übersetzungsschaltung (15) zum Einstellen der technischen Parameter (17) der Prozesssteuerelemente (22, 23) vorgesehen ist, welche ausgehend von benutzergewählten Werten der humansensorischen Attribute (12) und auf Basis eines im Voraus ermittelten Sensorlkprofils (7) des Vorstufen-Produkts (24) die technischen Parameter (17) zum Beeinflussen des Extrahierens der Genusssubstanzen bel der Herstellng des Lebensmittel produkts steuert, wobei
e) einer der mindestens zwei technischen Parameter (17) der Mahlgrad des Mahlwerks (22) ist,
f) die elektronische Übersetzungsschaltung (15) auf das Sensorikprofil (7) des Vorstufenprodukts (24) zugrelft, welches durch einen humansensorischen Profillerungsprozess (9) ermittelt worden ist, in dem nach einem Test-Schema (4) durch verschiedene Einstellungen der technischen Parameter (3) aus demselben Vorstufenprodukt (24) verschiedene spezifische Getränke (2) hergestellt und humansensorisch profillert (15) wurden.

7. Automat (30) nach Anspruch 6, **dadurch gekennzeichnet, dass** eine Eingabeeinrichtung (10) vorhanden ist, an welcher die Werte der humansensorischen Attribute (12) durch den Benutzer zu wählen sind.

8. Automat (30) nach Anspruch 6 oder 7, **dadurch gekennzeichnet, dass** die elektronische Übersetzungsschattung (15) mit einem Datenspeicher für ein Sensorlkprofil (7) mindestens eines Vorstufen-Produkts (24) versehen ist.

9. Automat (30) nach einem der Ansprüche 6 bis 8, **dadurch gekennzeichnet, dass** er einen Vorratsbehälter (29) für das Vorstufen-Produkt (24) und eine Lagerzeitmessvorrichtung (29) aufweist, welche mit der Übersetzungsschaltung (15) in Verbindung steht.

10. Automat (30) nach einem der Ansprüche 6 bis 9, **dadurch gekennzeichnet, dass** er einen Speicher für Rezepte (14) aufweist, in welchem die technischen Parameter (17) und/oder die Werte der humansensorischen Attribute (12) abgespeichert und zur benutzergesteuerten Herstellung abgerufen werden können.

11. Automat (30) nach einem der Ansprüche 6 bis 10, **dadurch gekennzeichnet, dass** er eine Datenschnittstelle (16) für eine Fernabfrage von Sensorikprofilen (7) verschiedener Vorstufen-Produkte (24) aufweist.

12. Automat (30) nach einem der Ansprüche 6 bis 11, **dadurch gekennzeichnet, dass** als Prozesssteuerelemente (22, 23) zur Herstellung eines trinkfertigen Kaffee-Getränks (27) zusätzlich zum Mahlwerk für Kaffeebohnen (22) mindestens eines der folgenden Mittel vorgesehen ist:
a) ein Erhitzer für Wasser (23),
b) ein Druckerzeuger für Wasser,
c) ein Volumensensor für das Wasser,
d) ein Zeitgeber für die Einwirkungszeit.

13. Automat (30) nach einem der Ansprüche 7 und 12, **dadurch gekennzeichnet, dass** an der Eingabeeinrichtung (10) die Werte eines oder mehrerer humansensorischen Attribute (12) wie z. B. "Bitterkeit", "Säure", "Körper", "Frucht", "Blume", "Crema", etc. direkt einstellbar sind.

14. Automat (30) nach einem der Ansprüche 6 bis 9 oder 11 bis 13 und nach Anspruch 10, **dadurch gekennzeichnet, dass** er ein Benutzerführungsprogramm aufweist, welches den Benutzer bei der Festlegung eines benutzerdefinierten Rezepts (14) unterstützt, indem mindestens zwei automatisch hergestellte Lebensmittel-Produkte (27) mit unterschiedlichen Werten der humansensorischen Attribute (12) hergestellt und dem Benutzer zusammen mit einer visuellen Darstellung der zugehörigen Werten der humansensorischen Attribute (12) zum Test vorgelegt werden und dass der Benutzer ausgehend von einem der Lebensmittel-Produkte (27) bei Bedarf eine Veränderung der Werte der humansensorischen Attribute (12) vornehmen kann und dass die entsprechenden technischen Parameter (17) und/oder Werte der humansensorischen Attribute (12) im Speicher für Rezepte (14) abgespeichert werden.

## Claims

1. Method of producing, in a user-controlled manner, a liquid food product (27), namely a ready-to-drink coffee beverage, from a preliminary-stage product (24), namely from roasted coffee beans, wherein
a) from the preliminary-stage product (24), a machine (30) extracts consumables which can be perceived by taste and/or smell, and transfers the same into the food product (27), wherein
b) the machine comprises a unit which has, as the process-control element, a grinder for coffee beans (22), and wherein
c) a user-controlled setting of at least two settable technical parameters of the machine (30) influences the extraction of the consumables in order to produce a desired quality of the food product (27),
**characterized in that**
d) the technical parameters (17) are set by a user-controlled electronic transmission circuit (15) which, on the basis of user-selected values relating to human sensory attributes (12) and of a previously determined (9) sensory profile (7) of the preliminary-stage product (24), controls the technical parameters (17) for influencing the extraction of the consumables during production of the food product, **in that**
e) one of the at least two technical parameters (17) is the degree of grinding of the grinder (22), and **in that**
f) the sensory profile (7) of the preliminary-stage product (24) is based on a human sensory profiling process (9) in which, in accordance with a test scheme (4), by way of various settings of the technical parameters (3), various specific beverages (2) have been produced from the same preliminary-stage product (24), and have been profiled in human sensory terms (5).

2. Method according to Claim 1, **characterized in that**, for the purpose of providing the sensory profile (7), in addition to a human sensory profiling (5), a chemical analysis (6) is carried out, and **in that** a correlation is calculated.

3. Method according to Claims 1 or 2, **characterized in that** the transmission circuit (15) operates in accordance with the principle of a neural network.

4. Method according to one of Claims 1 to 3, **characterized in that** the machine (30), for producing the food product (27), adds at least one ingredient product (26).

5. Method according to one of Claims 1 to 4, **characterized in that** a storage period (29) of the preliminary-stage product (24) is included in the calculation for setting the technical parameters (17).

6. Machine (30) for implementing a method according to Claim 1, comprising
a) a unit (1) by means of which consumables which can be perceived by taste and/or smell are extracted from the preliminary-stage product (24) and transferred into the food product (27),
b) at least two process-control elements (22, 23) for the user-controlled setting of two settable technical parameters (17) of the machine (30) and for influencing the extraction of the consumables in order to be able to produce a desired quality of the food product (27),
c) wherein the process-control element provided is a grinder for coffee beans (22),
**characterized in that**
d) an electronic transmission circuit (15) is provided for setting the technical parameters (17) of the process-control elements (22, 23), and this transmission circuit, on the basis of user-selected values relating to human sensory attributes (12) and of a previously determined sensory profile (7) of the preliminary-stage product (24), controls the technical parameters (17) for influencing the extraction of the consumables during the production of the food product, wherein
e) one of the at least two technical parameters (17) is the degree of grinding of the grinder (22),
f) the electronic transmission circuit (15) accesses the sensory profile (7) of the preliminary-stage product (24), this sensory profile having been determined by a human sensory profiling process (9) in which, in accordance with a test scheme (4), by way of various settings of the technical parameters (3), various specific beverages (2) have been produced from the same preliminary-stage product (24) and have been profiled in human sensory terms (5).

7. Machine (30) according to Claim 6, **characterized by** the presence of an input device (10) , at which the values relating to human sensory attributes (12) can be selected by the user.

8. Machine (30) according to Claim 6 or 7, **characterized in that** the electronic transmission circuit (15) is provided with a database for a sensory profile (7) of at least one preliminary-stage product (24).

9. Machine (30) according to one of Claims 6 to 8, **characterized in that** it has a storage container (29) for the preliminary-stage product (24), and also a storage-time gauge (29), which is connected to the transmission circuit (15).

10. Machine (30) according to one of Claims 6 to 9, **characterized in that** it has a memory for recipes (14), in which the technical parameters (17) and/or the values relating to human sensory attributes (14) can be stored and retrieved for user-controlled production.

11. Machine (30) according to one of Claims 6 to 10, **characterized in that** it has a data interface (16) for remote interrogation of sensory profiles (7) of various preliminary-stage products (24).

12. Machine (30) according to one of Claims 6 to 11, **characterized in that** the process-control elements (22, 23) provided for producing a ready-to-drink coffee beverage (27), in addition to the grinder for coffee beans (22), include at least one of the following means:
a) a heater for water (23),
b) a pressure generator for water,
c) a volume sensor for the water,
d) a timer for the duration of action.

13. Machine (30) according to either of Claims 7 and 12, **characterized in that** the values relating to one or more human sensory attributes (12), such as, for example, "bitterness", acidity", "body", "fruitiness", "bouquet", "crema", etc. can be set directly at the input device (10).

14. Machine (30) according to one of Claims 6 to 9 or 11 to 13 and according to Claim 10, **characterized in that** it has a user-guidance program which assists the user in establishing a user-defined recipe (14) **in that** at least two automatically produced food products (27) with different values relating to human sensory attributes (12) are produced and presented to the user for testing, together with a visual display of the associated values relating to human sensory attributes (12), and **in that**, on the basis of one of the food products (27), the user can, if required, alter the values relating to human sensory attributes (12), and **in that** the appropriate technical parameters (17) and/or values relating to human sensory attributes (12) are stored in the memory for recipes (14).

## Revendications

1. Procédé de fabrication commandé par l'utilisateur d'un produit alimentaire liquide (27), notamment d'une boisson de café prête à boire, à partir d'un produit préparatoire (24), en particulier à partir de grains de café torréfiés, dans lequel
a) à partir du produit préparatoire (24), on extrait au moyen d'un automate (30) des substances agréables perceptibles de façon gustative et/ou olfactive et on les transfère dans le produit alimentaire liquide (27), dans lequel
b) l'automate comprend une machine, qui présente comme élément de commande du processus un moulin pour les grains de café (22), et dans lequel
c) par un réglage commandé par l'utilisateur d'au moins deux paramètres techniques réglables de l'automate (30), on influence l'extraction des substances agréables afin de préparer un produit alimentaire (27) de la qualité souhaitée,
**caractérisé en ce que**
d) on effectue le réglage des paramètres techniques (17) au moyen d'un circuit de conversion électronique (15) commandé par l'utilisateur qui, à partir de valeurs choisies par l'utilisateur des caractéristiques de perception humaine (12) et sur la base d'un profil de perception (7) déterminé au préalable (9) du produit préparatoire (24), commande les paramètres techniques (17) afin d'influencer l'extraction des substances agréables lors de la préparation du produit alimentaire, **en ce que**
e) un des au moins deux paramètres techniques (17) est le degré de mouture du moulin (22), et **en ce que**
f) le profil de perception (7) du produit préparatoire (24) est basé sur un processus de profilage de perception humaine (9), dans lequel on a préparé et profilé de façon humainement perceptible différentes boissons spécifiques (2) à partir du même produit préparatoire (24) selon un schéma d'essai (4) au moyen de différents réglages des paramètres techniques (3).

2. Procédé selon la revendication 1, **caractérisé en ce que** l'on effectue une analyse chimique (6) en plus d'un profilage de perception humaine (5) pour l'élaboration du profil de perception (7) et **en ce que** l'on calcule une corrélation.

3. Procédé selon la revendication 1 ou 2, **caractérisé en ce que** le circuit de conversion (15) opère selon le principe d'un réseau neuronal.

4. Procédé selon l'une quelconque des revendications 1 à 3, **caractérisé en ce que** l'automate (30) ajoute au moins un ingrédient (26) pour la préparation du produit alimentaire (27).

5. Procédé selon l'une quelconque des revendications 1 à 4, **caractérisé en ce que** l'on calcule une durée de séjour (29) du produit préparatoire (24) pour le réglage des paramètres techniques (17).

6. Automate (30) pour la mise en oeuvre d'un procédé selon la revendication 1, comprenant
a) une machine (1) pour l'extraction de substances agréables perceptibles de façon gustative et/ou olfactive à partir du produit préparatoire (24) et pour leur transfert dans le produit alimentaire (27),
b) au moins deux éléments de commande de processus (22, 23) pour le réglage commandé par l'utilisateur de deux paramètres techniques réglables (17) de l'automate (30) et pour influencer l'extraction des substances agréables, afin de pouvoir préparer le produit alimentaire (27) de la qualité souhaitée,
c) dans lequel il est prévu comme élément de commande du processus un moulin pour les grains de café (22),
**caractérisé en ce que**
d) il est prévu un circuit de conversion électronique (15) pour le réglage des paramètres techniques (17) des éléments de commande du processus (22, 23) qui, à partir de valeurs choisies par l'utilisateur des caractéristiques de perception humaine (12) et sur la base d'un profil de perception déterminé au préalable (7) du produit préparatoire (24), commande les paramètres techniques (17) afin d'influencer l'extraction des substances agréables lors de la préparation du produit alimentaire, dans lequel
e) un des au moins deux paramètres techniques (17) est le degré de mouture du moulin (22), et **en ce que**
f) le circuit de conversion électronique (15) agit sur le profil de perception (7) du produit préparatoire (24), qui a été déterminé par un processus de profilage de perception humaine (9), dans lequel on a préparé et profilé de façon humainement perceptible (5) différentes boissons spécifiques (2) à partir du même produit préparatoire (24) selon un schéma d'essai (4) au moyen de différents réglages des paramètres techniques (3).

7. Automate (30) selon la revendication 6, **caractérisé en ce qu'**il comporte un dispositif d'entrée (10), dans lequel les valeurs des caractéristiques de perception humaine (12) peuvent être choisies par l'utilisateur.

8. Automate (30) selon la revendication 6 ou 7, **caractérisé en ce que** le circuit de conversion électronique (15) est doté d'une mémoire de données pour un profil de perception (7) d'au moins un produit préparatoire (24).

9. Automate (30) selon l'une quelconque des revendications 6 à 8, **caractérisé en ce qu'**il présente un réservoir (29) pour le produit préparatoire (24) et un dispositif de mesure du temps de séjour (29), qui est en liaison avec le circuit de conversion (15).

10. Automate (30) selon l'une quelconque des revendications 6 à 9, **caractérisé en ce qu'**il présente une mémoire pour des recettes (14), dans laquelle les paramètres techniques (17) et/ou les valeurs des caractéristiques de perception humaine (12) sont mémorisé(e)s et peuvent être appelé(e)s pour la préparation commandée par l'utilisateur.

11. Automate (30) selon l'une quelconque des revendications 6 à 10, **caractérisé en ce qu'**il présente une interface de données (16) pour une interrogation à distance de profils de perception (7) de différents produits préparatoires (24).

12. Automate (30) selon l'une quelconque des revendications 6 à 11, **caractérisé en ce qu'**il est prévu, comme éléments de commande du processus (22, 23) pour la préparation d'une boisson de café prête à boire (27), en plus du moulin pour les grains de café (22), au moins un des moyens suivants:
a) un système de chauffage pour l'eau (23);
b) un générateur de pression pour l'eau;
c) un détecteur de volume pour l'eau;
d) une minuterie pour le temps d'action.

13. Automate (30) selon l'une quelconque des revendications 7 et 12, **caractérisé en ce que** les valeurs d'une ou de plusieurs caractéristiques de perception humaine (12), comme par exemple "amertume", "acidité", "corps", "fruit", "fleur", "crème", etc., sont réglables directement au dispositif d'entrée (10).

14. Automate (30) selon l'une quelconque des revendications 6 à 9 ou 11 à 13 et selon la revendication 10, **caractérisé en ce qu'**il présente un programme de guidage de l'utilisateur, qui aide l'utilisateur lors de l'élaboration d'une recette (14) définie par l'utilisateur, par le fait qu'au moins deux produits alimentaires (27) sont préparés automatiquement avec des valeurs différentes des caractéristiques de perception humaine (12) et sont présentés à titre d'essai à l'utilisateur en même temps qu'une représentation visuelle des valeurs correspondantes des caractéristiques de perception humaine (12) et **en ce que** l'utilisateur peut, à partir d'un des produits alimentaires (27), effectuer si nécessaire une modification des valeurs des caractéristiques de perception humaine (12), et **en ce que** les paramètres techniques correspondants (17) et/ou des valeurs correspondantes des caractéristiques de perception humaine (12) sont mémorisé(e)s dans la mémoire des recettes (14).
